# EUROPÄISCHE PATENTSCHRIFT

(11) **EP 1 387 611 B1**
(45) Veröffentlichungstag und Bekanntmachung des Hinweises auf die Patenterteilung: **19.09.2007**
(21) Anmeldenummer: 02745059.2
(22) Anmeldetag: 14.05.2002
(51) Int. Cl.: A01M 7/00, A01C 21/00, A01C 23/04

(54) **VERFAHREN UND SYSTEM ZUM VOLUMENSPEZIFISCHEN BEEINFLUSSEN VON BODEN UND PFLANZEN**
METHOD AND SYSTEM FOR VOLUME-SPECIFIC TREATMENT OF GROUND AND PLANTS
PROCEDE ET SYSTEME DE TRAITEMENT SPECIFIQUE AU VOLUME DE SOLS ET DE PLANTES

(30) Priorität: 14.05.2001 DE 10123301; 13.05.2002 DE 10221948
(43) Veröffentlichungstag der Anmeldung: 11.02.2004
(73) Patentinhaber: Kümmel, Knut, 12307 Berlin (DE)
(72) Erfinder: Kümmel, Knut, 12307 Berlin (DE)
(74) Vertreter: Hannig, Wolf-Dieter
(86) Internationale Anmeldenummer: PCT/DE2002/001777
(87) Internationale Veröffentlichungsnummer: WO 2002/091823

(56) Entgegenhaltungen:
- DE-A- 19 950 396
- US-A- 5 258 822
- US-A- 5 278 423

## Beschreibung

Die Erfindung betrifft ein Verfahren zum bedarfsgerechten und volumenspezifischen Beeinflussen von Boden und Pflanzen, insbesondere durch Ausbringen/Dosieren von Sprühmitteln wie Pflanzenschutz- und/oder Düngemittel sowie Wasser, Bearbeiten des Bodens, Unterwuchspflege und/oder Bearbeitung und Behandlung der Pflanze, auf mit Bäumen wie Allee- oder Waldbäumen o. dgl., Raumkulturen, insbesondere Wein- und Obstkulturen, Hopfen, Zitrus, Oliven o. dgl., Sträuchern oder mit Stauden wie Bananen o. dgl. regelmäßig oder unregelmäßig bepflanzten Arealen, bei dem die Pflanzen mit durch auf einem befahrbaren Träger befestigten, an den Pflanzen umlaufend vorbeigeführten Einzelsensor erzeugte monochromatische pulsierende Laserstrahlen abgetastet werden, das vom Blattwerk reflektierte Strahlungsspektrum von diesem Sensor aufgenommen und das erfasste Spektrum in optische Signale umgewandelt wird und diese Signale einem Rechner zugeführt werden, der die Signale speichert, auswertet und das Ausbringen/Dosieren der Sprühmitteldosis in Abhängigkeit des Vegetationszustandes, das Bearbeiten des Bodens und der Pflanze sowie die Ernte durch Ausgeben von Schaltbefehlen zum Betätigen der dem fahrbaren Träger zugeordneten Sprüheinrichtungen und Gebläse und/oder Bearbeitungsgeräte steuert.

Die Erfindung betrifft ferner ein System zum Durchführen des Verfahrens mit einem fahrbaren Träger, beispielsweise Fahrzeug und/oder angekoppelte Arbeitsmaschinen, einem am Träger befestigten Sensor mit Strahlungsquelle zum Aussenden eines Impulslaserstrahles, einem um eine vertikale Achse drehbaren Spiegel zum Ausrichten des Strahles auf eine Laubwand, einen Strahlungsempfänger zum Empfangen der von der Laubwand reflektierter Strahlen, einem Rechner zum Verarbeiten der reflektierten Strahlung und zum Ansteuern einer am Träger befestigten Düsen aufweisenden Sprüheinrichtung mit Vorratsbehälter für das Sprühmittel, wobei die Düsen im deutlichen Abstand von dem Sensor angeordnet ist, eine Flüssigkeitspumpe zum Fördern des Sprühmittels zu den Düsen, Ventilen zum Öffnen und Schließen der Düsen und ein Gebläse zum Erzeugen einer Zweiphasenströmung.

Die Erfindung betrifft des weiteren auch ein System zur Durchführung des Verfahrens, mit einem fahrbaren Träger, beispielsweise Fahrzeug und/oder angekoppelte Arbeitsmaschinen, einem am Träger befestigten Sensor mit Strahlungsquelle zum Aussenden eines Impulslaserstrahles, einem um eine vertikale Achse drehbaren Spiegel zum Ausrichten des Strahles auf eine Laubwand, einen Strahlungsempfänger zum Empfangen der von der Laubwand reflektierter Strahlen, einem Rechner zum Verarbeiten der reflektierten Strahlung und zum Ansteuern mindestens eines am Träger befestigten Bearbeitungsgerätes, wobei das mindestens eine Bearbeitungsorgan im deutlichen Abstand von dem Sensor angeordnet ist.

Bei der Behandlung von Pflanzen mit flüssigen Pflanzenschutzmitteln und/oder Dünger muss eine bestimmte vorgegebene Dosis des Wirkstoffes auf allen Zielflächen der Pflanzen oder Schaderreger sicher ausgebracht werden. Zur Applikation dieser Wirkstoffe in Raumkulturen wie Wein, Obst, Hopfen, Zitrus, Oliven o.ä. kommen Gebläsesprühgeräte zum Einsatz, die die Flüssigkeitstropfen der zerstäubten Pflanzenschutzmittel in einem Zweiphasenfreistrahl zu den seitlich und oberhalb des Gerätes befindlichen Zielflächen der Pflanzen transportieren. Das Sprühgerät fährt dabei zwischen den eine Fahrgasse bildenden Pflanzenreihen hindurch. Je nach Vegetationsform und Erziehung können die Pflanzen so kultiviert werden, dass sie oberhalb der Fahrgasse eine geschlossene Vegetationsdecke, beispielsweise eine Pergoladecke beim Wein oder Hohlkronenerziehung beim Obst, bilden.

Für die Applikation von flüssigen Pflanzenschutzmitteln in Raumkulturen wie Wein, Obst und Hopfen werden Sprühgeräte mit ultraschallgesteuerten Düsen (siehe DE 39 00 221 A1, DE 39 00 223 A1) oder optisch bzw. lasergesteuerten Sprühdüsen (siehe DE 195 18 058 A1, EP 0 554 732 A1, EP 0 743 001 A1) eingesetzt. Diese bekannten Geräte setzen eine Vielzahl von Einzeldüsen ein, die von Einzelsensoren gesteuert werden. Die Einzelsensoren erkennen das Vorhandensein von Zielflächen, beispielsweise Laubflächen, im Tastbereich der Sensoren.
Aus dem Verlauf der Sensorsignale wird für jeden Höhenbereich eine Ja-Nein-Entscheidung abgeleitet, so dass die Behandlung der Pflanzen immer dann und dort unterbrochen wird, wo keine pflanzliche Zielfläche von dem Sprühstrahl des Gerätes erreicht wird.

Nach der DE 195 18 058 A1 werden die Pflanzen mit einzelnen übereinander angeordneten Sensoren, vorzugsweise optischen Tastern, zonenweise den Düsen zugeordneten Höhenbereichen der Pflanzen detektiert. Die Pflanzen werden somit über die Höhe nur in schmalen stichprobenartigen Streifen erkannt. Zwischen den Sensoren horizontal wachsende Zweige oder Ranken bleiben unerkannt. Eine Distanzinformation für den jeweiligen Abstand zwischen Düse und Ziel, die der erforderlichen Flugstrecke der Tropfen des Sprühmittels entspricht, steht nicht zur Verfügung. Dies bedeutet, dass beim Ausbringen des Sprühmittels ein vorauseilendes Öffnen und Schließen der Sprühdüsen nicht realisiert wird, so dass das Sprühmittel insbesondere in den von dem Sprühgerät entfernteren Triebzonen wie lichtere Gipfelzonen der Bäume oder Reben, nicht zielsicher appliziert werden kann. Diese Triebzonen sind jedoch aus phytopathologischer Sicht besonders sensibel und müssen zum Schutz der Kultur vor Infektionen sicher behandelt werden.

Aus der US 5,278,423 A1 ist des weiteren eine Lösung bekannt, die einen einzelnen umlaufenden Lasersensor für die Detektion von Blattwerk und zum Erzeugen von für die Steuerung eines landwirtschaftlichen Sprühgerätes gebräuchlichen Ausgangssignalen in einem Sprühverfahren verwendet. In diesem Sprühverfahren wird ein mit einem gepulsten Triggersignal ausgelöster, gepulster Laserstrahl von einem Sensor emittiert. Ein Empfänger empfängt den von einem Punkt auf dem Zielbaum reflektierten Laserstrahl, wobei der Empfänger mit einem Ausgang für einen ausgewählten gepulsten Strahl repräsentativer Übertragungszeit versehen ist, der der Übertragungszeit vom Zielpunkt zum Empfänger entspricht. Der gepulste Laserstrahl tastet das Blattwerk des Zielbaumes vertikal ab, wobei das Abtasten durch einen Winkel bestimmt wird, der dem Winkel des Laserstrahls relativ zu einem Referenzwinkel entspricht.
Es wird sodann eine Stellung des Sensors während eines Abtastzyklus bestimmt, bei der der Abtastzyklus als ein vollständiger Umlauf des Laserstrahls um die Achse des Sprüherweges in einer vertikalen Abtastebene bei einer Stellung entlang der Achse der Sprüherbewegung definiert ist.
Anschließend wird eine Vielzahl von bestimmten Sprühbereichen festgelegt. Die Sprühbereiche besitzen eine vorbestimmte Richtung und die auf den Sprüher angeordneten Sprühköpfe öffnen zum Ausbringen der Sprühmittel.
Der Arbeitsbereich, der Winkel und die Distanzinformation werden von einem Mikroprozessor verarbeitet, um die Baumhöhe und eine dieser Höhe entsprechenden Stellung des Sprühkopfes für eine Abtastmessung in einer geeigneten Bewegungslage des Sprühers einzustellen.
Der in diesem bekannten Verfahren verwendete Sensor setzt sich aus Lasermitteln für die Bestimmung eines Bereiches vom Sensor zu in einer Reihe gelegenen Bäumen mit Laubwerk zusammen, entlang dieser der Sensor bewegt wird, und für die Abgabe von entsprechenden Ausgangsdaten des Bereiches, die einem Sensorwinkel für jeden Datenausgang des Bereiches entsprechen, Mittel für die Bestimmung einer Wegstrecke für den Sensor entlang des Laubwerkes, wobei die Wegstrecke die Distanz zwischen dem Sensor und den Sprühköpfen darstellt, Mittel für die Verarbeitung der entsprechenden Ausgangsdaten des Bereiches und der Wegstrecke für die Feststellung der Präsenz und der Signatur des detektierten Laubwerke, wobei die Verarbeitungsmittel Steuersignale für gebräuchliche landwirtschaftliche Sprüher ausgeben.

Mit dieser bekannten Lösung werden ganze Laubflächen oder Kronen bzw. Schattenflächen als Einheit erkannt, mit deren Hilfe die Düsen zum Ausbringen des Sprühmittels geschaltet werden. Es werden weder Lücken innerhalb dieser Einheit, die Vegetationsentwicklung der Pflanzen und deren Strukturinformationen noch Informationen aus der Tiefe der Laubwand berücksichtigt. Das bedeutet, dass das Ausbringen des Sprühmittels nicht raumspezifisch an den Bedürfnissen der Pflanzen orientiert ist und ungenau bleibt, wodurch der Sprühmittelverbrauch entsprechend hoch oder ineffektiv ist. Diese bekannte Lösung ist deshalb auch nur für sehr hohe Kulturen mit einem sehr großen Reihenabstand getrennt einzeln in der Reihe stehender Pflanzen geeignet.

Des weiteren nutzen alle diese bekannten Lösungen für die Wegmessung Radgeber am Fahrzeugrad. Das rollende Rad auf unbefestigtem, unterschiedlich strukturiertem Untergrund unterliegt ständigem Schlupf, der je nach Anordnung der Sensoren und der Düsen zu fehlerhafter Zielgenauigkeit in der Ausbringung des Sprühmittels führt.
Wankbewegungen der Sprühgeräte bei ihrer Fahrt auf der unbefestigten Fahrbahn verursachen eine seitliche Verlagerung der Einzelsensoren, wenn diese oberhalb oder unterhalb des Wankschwerpunktes angeordnet sind. Dies führt zu Fehlern bei der Entfernungsmessung in Abhängigkeit der Sensorposition relativ zum Wankschwerpunkt. Die Bezugsmesspunkte der Einzelsensoren verlagern sich vertikal an der Laubwand, womit andere als die interessierenden Zonen erfasst werden.

Bei der Behandlung der oberen Randzone einer Pflanzenkrone führt die Wankbewegung entweder zu einem Übersprühen der Laubwand oder es wird die phytopatholgisch sensible Gipfelregion nicht bzw. nur ungenügend mit Sprühmittel beaufschlagt.
Die DE 197 26 917 A1 beschreibt ein Verfahren zur berührungslosen Konturabtastung von sich über dem Boden erstreckenden Konturen mittels einer Laserstrahlsende/empfangseinrichtung, bei dem während der Fahrt der Landmaschine fortlaufend aus den ermittelten Entfernungswegen die Kontur über die Abtastbreite ermittelt und gespeichert wird. Mit einem Zeitmessglied wird eine Lagebestimmung vorgenommen.
In der DE 44 34 042 C2 ist eine Anordnung zum berührungslosen Erfassen verkehrsbezogener Daten von räumlich ausgedehnten Objekten offenbart, die sich auf einer Fahrbahn, Straße oder Fahrspur als Überwachungsoberfläche bewegen, mit einem Laser, einer Lichtempfangs- und einer Auswerteeinrichtung, die eine Entfernungsbestimmung mittels optischer Laufzeitmessung durchführen, sowie mit einer Scan-Einrichtung, die den Laserstrahl so ablenkt, dass dieser in einer Umlaufbewegung den Mantel eines Kegels beschreibt, dessen Symmetrieachse orthogonal oder geneigt zur Überwachungsoberfläche verläuft.

Bei diesem Stand der Technik liegt der Erfindung die Aufgabe zugrunde, ein Verfahren und ein System der eingangs genannten Art derart zu verbessern, dass der pflanzliche Bestand räumlich lückenlos abgetastet und das Beeinflussen des Boden- und Pflanzenzustandes unter gleichzeitiger Berücksichtigung von morphologischen, pflanzenphysiologischen, gerätetechnischen und standortspezifischen Eigenschaften effizient gesteuert wird.

Diese Aufgabe wird durch ein Verfahren der eingangs genannten Gattung mit den kennzeichnenden Merkmalen des Anspruches 1 und durch ein System mit den kennzeichnenden Merkmalen der Ansprüche 31 und 32 gelöst.

Vorteilhafte Ausgestaltungen des Verfahrens und des Systems sind den Unteransprüchen entnehmbar.

Die Erfindung soll nachstehend an mehreren Ausführungsbeispielen näher erläutert werden.

Es zeigt bzw. zeigen:
- Fig. 1: eine schematische Darstellung des erfindungsgemäßen Sensors,
- Fig. 1a: eine schematische Darstellung der Anordnung des Sensors am Träger,
- Fig. 2: ein schematische Darstellung der Abtastung eines Bestandes mit Laserstrahlen,
- Fig. 3, 3a und 3b: die Prozessstruktur und der Ablauf des erfindungsgemäßen Verfahrens und
- Fig. 4: eine Prinzipdarstellung des verwendeten Ringspeichers.

### Beispiel 1

Das erfindungsgemäße Verfahren soll zunächst in einem Areal mit regelmäßig angebauten Pflanzen einer Raumkultur wie Wein beschrieben werden.

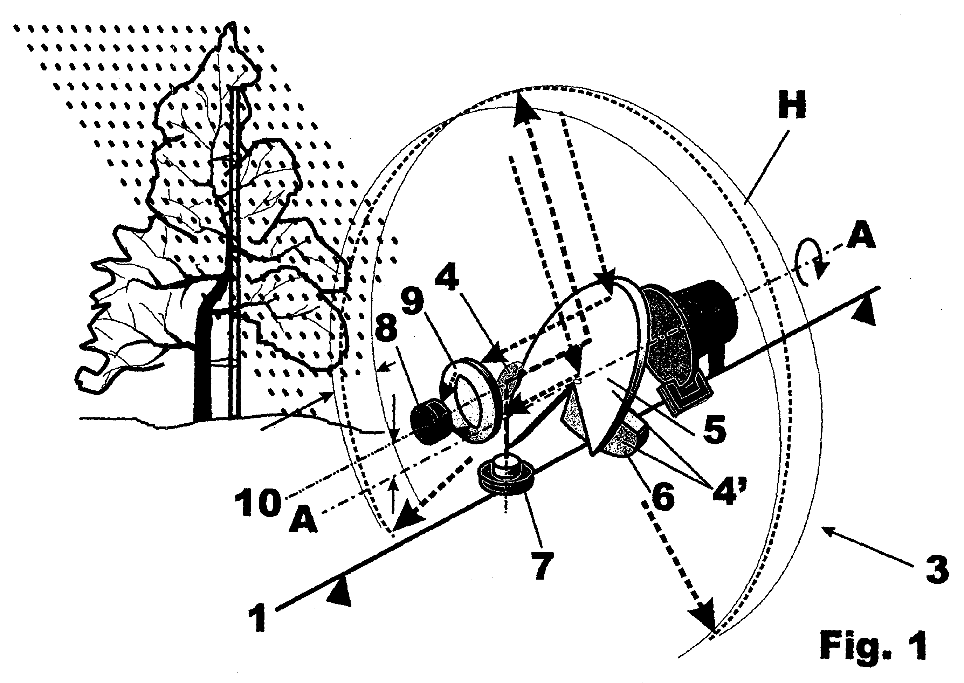

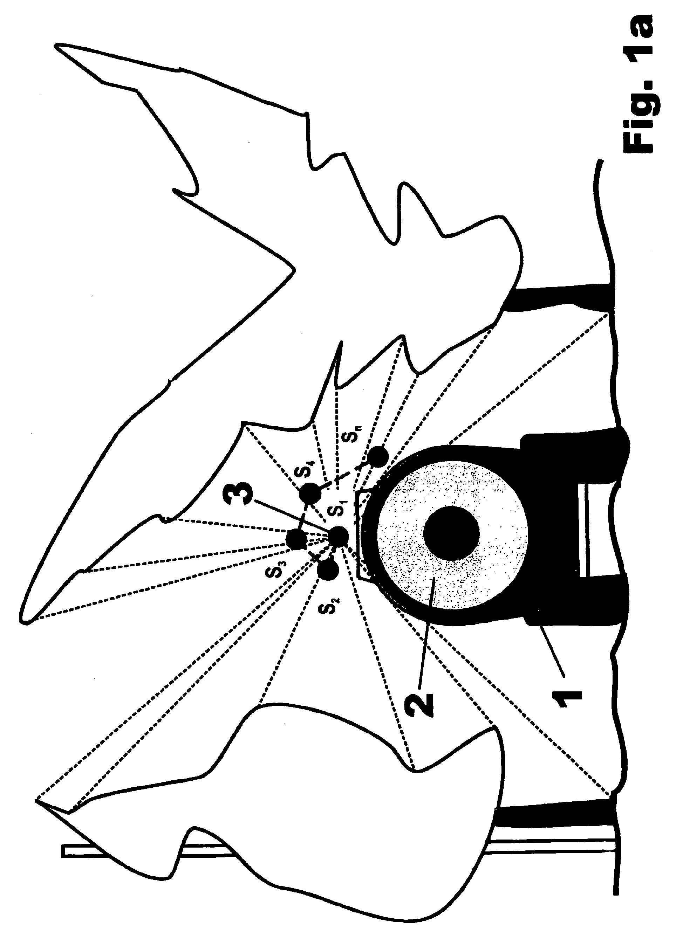

Das erfindungsgemäße System zum volumenspezifischen Ausbringen von Sprühmitteln, zur Behandlung und Bearbeitung der Pflanzen in eine bzw. von einer Raumkultur, deren Einzelpflanzen in Fahrgassen bildenden Reihen dicht nebeneinander stehen, besteht im wesentlichen aus einem fahrbaren Träger **1,** beispielsweise einem Zugfahrzeug, das eine Sprüheinrichtung **2** trägt, einem Gebläse zum Erzeugen einer Zweiphasenströmung, einem zentralen während der Fahrt des Trägers durch die Fahrgasse rotierenden Lasersensor **3** und einem Rechner zum Verarbeiten aller durch den Sensor gewonnenen Daten. Zu der Sprüheinrichtung **2** gehört ein Behälter zur Aufnahme des Sprühmittels, eine Förderpumpe zum Fördern des Sprühmittels zu den Sprühdüsen, Ventile zum Öffnen und Schließen der Düsen. Kommen Bearbeitungseinrichtungen zum Einsatz sind diese entsprechend am fahrbaren Träger **1** befestigt.
Der Sensor **3** besteht -wie Fig. 1 und 1a schematisch zeigtaus einem Spiegel **4',** der rotierend auf einer Achse **A** angeordnet ist. Der Spiegel ist zur Drehachse **A** unterschiedlich geneigt und als Formspiegel ausgebildet. In diesem Beispiel ist der Spiegel **4'** aus tortenförmigen Kreissegmenten **5** und **6** so aufgebaut, dass das Segment **5** eine Neigung von 45° gegenüber der Drehachse **A** und das Segment **6** eine Neigung von 67, 5° gegenüber der Drehachse **A,** d.h. 22, 5° gegenüber der Normalen zur Drehachse **A** aufweist.
Der Sensor **3** besitzt eine Strahlquelle **7** und einen Empfänger **8.** Die Drehbewegung des Spiegels **4'** wird durch eine Drehwinkelmessung verfolgt. Von der Strahlquelle **7** erzeugte Lichtimpulse werden über den Umlenkspiegel **4** und Formspiegel **4'** im Raum innerhalb der Fahrgasse verteilt. Die von den getroffenen Objekten (Laubwand, Blatt, Stamm, Trieb u.ä.) reflektierten Strahlen werden über den Umlenkspiegel **4** und den Formspiegel **4'** und eine Optik **9** auf den Empfänger **8** fokussiert. Damit der Sensor **3** freie Sicht für den Sende- und Empfangsstrahl hat, muss dieser am Träger **1** so befestigt sein, dass eine ausreichend freie Sicht gewährleistet ist.
Der Sensor **3** erfasst die Pflanzen des Bestandes seitlich und oberhalb der Sprüheinrichtung **2** in einem Raster aus Lasertastpunkten, das bei Vorausfahrt des Trägers **1** in der Fahrgasse streifenförmig wendelförmig entlang der Pflanzenreihen fortgeschrieben wird. Mit einer Winkelauflösung von beispielsweise 1° sind vertikale Abstände der Tastpunkte von wenigen Zentimetern an der Belaubung von Pflanzenreihen mit 5 m Reihenabstand ohne weiteres möglich.
In diesem Beispiel sollen deshalb Messwerte in einem räumlich hoch aufgelösten Gitterraster von etwa 5 x 5 cm bei üblichen Fahrtgeschwindigkeiten des Trägers 1 bis 8 km/h aufgenommen werden.
Der Laserstrahl wird in Fahrtrichtung nach vorn und vornseitlich so abgelenkt, dass er ein sich in Fahrtrichtung öffnendes Kegelmantelsegment überstreicht. Dieser Teil des Laserstrahles trifft die unteren Bereiche der Pflanzen entlang einer Linie, die horizontal nebeneinander liegende Objekte erfasst. Der Teil des Kegelmantelsegmentes, der am weitesten in Fahrtrichtung nach vorn den Boden schneidet, bildet den Scheitelpunkt einer Hyperbel. Natürlich gehört es auch zu der Erfindung, dass der Laserstrahl entgegen der Fahrtrichtung abgelenkt werden kann.
Die Drehachse **A** des Formspiegels **4'** liegt exzentrisch im Strahlengang **10** des Sensors **3.** Durch diese Exzentrizität oszilliert die Abstrahlebene des Sendestrahls um einen der Exzentrizität entsprechenden Betrag senkrecht zur Hauptebene **H.** Der Kegelmantelfläche ist dadurch eine entsprechende Verlagerung überlagert. Die Amplitude der Verlagerung durchläuft eine volle Sinuskurve während einer Umdrehung des Formspiegels **4'.**

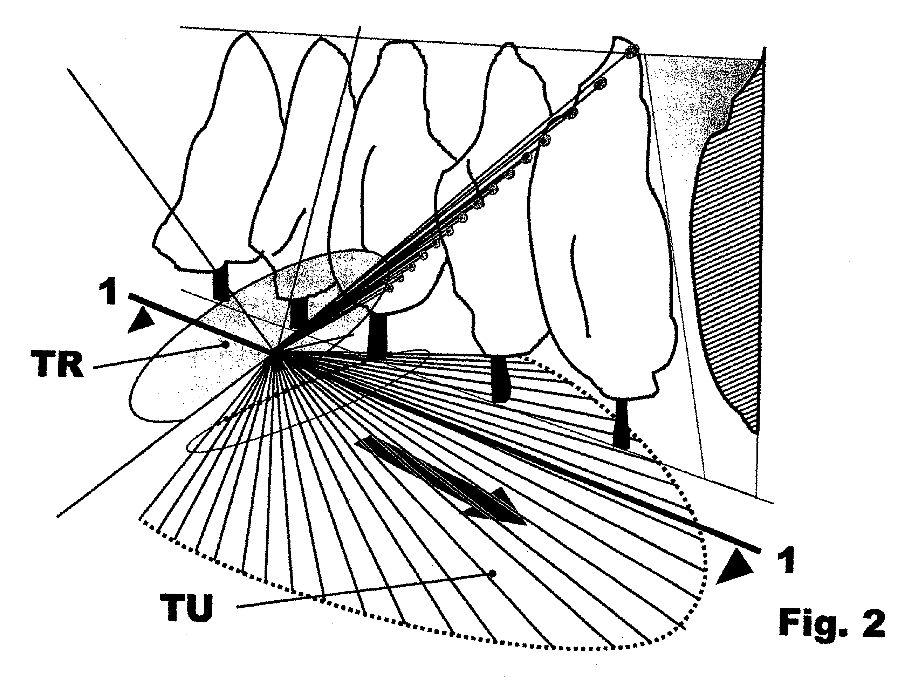

Grobe Messwerte können mit Hilfe der Abstandsmessung zu weiter entfernten Objekten ermittelt werden. Im Blickfeld des Sensors **3** seitlich liegende Objekte verlagern sich relativ zum Stand des Sensors von einem Winkelsegment zum anderen, womit der Weg bestimmt werden kann, wenn die Distanz zu dem beobachteten Objekt bekannt ist. An natürlich vielgestaltigen Strukturen wie den Pflanzenbeständen einer Laubwand in Raumkulturen erfolgt für die Wegmessung eine Auswahl signifikanter Objekte mit einer Filterung der Entfernung zu den seitlich des Trägers **1** erkennbaren Objekten.
Der Strahl der gepulsten IR-Laserquelle wird -wie in Fig. 2 dargestellt- über den rotierenden Formspiegel **4'** für den oberen Tastraum **TR** um vorzugsweise 90° aus der Strahlrichtung abgelenkt und in einer Strahlebene kreisförmig verteilt. Die IR-Laserquelle **7** wird dabei so gepulst, dass über den Formspiegel **4'** bei quasi gleicher Winkelstellung (Verhältnis von Lichtgeschwindigkeit zu Winkelgeschwindigkeit des Spiegels) das Reflexionssignal von dem vom Strahl erfassten Objekt zurück zum Empfänger **8** des Sensors **3** gelangt.
Die Tastbereiche des Sensors liegen nicht in einer Ebene und überspannen einen Raumwinkel von mehr als einer Viertel-Kugelkalotte.
Ausgehend von einer Position auf dem Träger **1** wird zu den Seiten und nach oben eine Ebene abgetastet, wobei für diesen Bereich ein Winkel von 45° zwischen Formspiegel **4'** und Drehachse **A** vorliegt. In Fahrtrichtung wird der Laserstrahl über einen Spiegelwinkel von >45° abgelenkt. Damit überstreicht der Strahl einen Kegelmantel, der vom Sensor 3 von der Spitze des Kegels nach vorn auf die Fahrbahn gerichtet ist, wobei die Kegelachse die Fahrbahn in der Mitte der Fahrspur vor dem Träger **1** durchsticht. Vom Kegelmantel werden die Pflanzenreihen an den Seiten (abhängig vom Spiegelwinkel und Auslegung) von einem Bereich des Strahles in annähernd horizontaler oder leicht geneigter Bahn abgetastet. In diesem Bereich wird die Bewegung von Einzelobjekten (Stamm, Rebstock, Baumpfahl o.ä.) oder Strukturen (Kronenvolumen, vordere Kontur der Krone o.ä.) so verfolgt, dass daraus die Struktur an sich ermittelt und der Verlauf der Struktur relativ zum Träger erkannt wird. Damit kann der zurückgelegte Weg in der Reihe bestimmt werden. Da die Pflanzen langjährig am gleichen Ort kultiviert werden, kann diese Position durch die bekannten Orte der Pflanze sowohl aus der zurückgelegten Wegstrecke als auch über eine Identifizierung der Pflanzen erfolgen. Fehler in beiden Messvarianten können durch gegenseitige Verknüpfung korrigiert werden.
Die Tastebene des Strahlenganges mit 45°-geneigtem Spiegel **4'** erfasst die Pflanzen, beispielsweise Wein in Pergolaerziehung oder mediterrane Obstanlagen mit Hohlkrone, in vertikaler Richtung seitlich und oberhalb des Trägers **1** auf einem geschlossenen Bogen. Durch die Exzentrizität wird dem Strahl im Verlauf der Spiegelumdrehung die zuvor beschriebene sinusförmige Verlagerung senkrecht zur Bahnkurve überlagert. Die Amplitude ist durch die Exzentrizität und den Spiegelwinkel bestimmt. Bei der Drehbewegung des Spiegels **4'** treten an jeder Stelle der Bahnkurve immer gleiche Beträge in den Verlagerungen auf, die entsprechend berücksichtigt, keine funktionellen Nachteile mit sich bringen.
Für die Ortung und Vermessung von Pflanzen und zur Lagebestimmung eines Trägers **1** mit einer Sprüheinrichtung **2** zur Applikation von Sprühmitteln in Reihenkulturen ist der Spiegel **4'** im Sensor **3** so ausgebildet, dass ein ebener und ein räumlich gekrümmter Bereich genutzt werden können. Die Form und Ausdehnung der ebenen Spiegelbereiche bestimmen die optischen Eigenschaften des Sensors **3** hinsichtlich Reichweite und Empfindlichkeit.

Ein räumlich hochaufgelöstes Lichtpunktgitter (Raster) eines Laserstrahles aus einer zentralen Strahlquelle **7** vermeidet Messfehler, wie sie bei entlang einer Linie an unterschiedlichen Positionen angeordneten Einzelsensoren und bei Fahrzeugbewegungen auftreten können.
Der zentrale Sensor **3** ist deshalb in diesem Beispiel im Bereich des Trägerschwerpunktes positioniert, womit Translations- und Rotationsbewegungen des Sensors selbst als Folge Eigenbewegungen des Trägers **1** berücksichtigt und korrigiert werden können.
Die räumliche Kurve, mit der die Umgebung vor, seitlich und über dem Träger **1** beobachtet wird, weist in den Bereichen des Überganges von einem Spiegelsegment zum anderen, verminderte optische Leistungen auf. In diesen Bereichen ist der Pflanzenbestand immer besonders nahe am Sensor **3** positioniert, so dass ein vermindertes optisches Leistungsvermögen dort nicht nachteilig ist.
Die Anordnung des Sensors **3** ist sowohl auf dem Träger 1 als auch auf Zusatzeinrichtungen möglich.
Der Sensor **3** kann nicht nur zum Steuern des Ausbringens von Sprühmitteln eingesetzt werden, sondern ist auch in der Lage sämtliche Pflanzenbauvorgänge in Raumkulturen, unregelmäßigen Bepflanzungen mit Bäumen, Stauden, Sträuchern o. dgl., die heute mit unterschiedlichen Sensoren und Tastern zum Erkennen der Rebstöcke und Stämme eingesetzt werden, zu überwachen und zu steuern (Mähen, Schneiden der Reben, Binden, Entblättern der Traubenzone, Unterschneiden von Unkraut in der Reihe zwischen den Stämmen oder Stöcken, Mulchen von Gras und Schnittholz, Lockern, Säen, Düngen und Transporte). Insbesondere kann die Führung von Trauben-Vollerntern (Anzahl, Farbe, Reife usw.) geregelt werden.
Das erfindungsgemäße System ist in der Lage den Applikationsprozess selbsttätig durchzuführen. Es entfällt die Notwendigkeit von Einstellungen am Sensor und am Träger.
Die mit dem erfindungsgemäßen System gewonnenen Daten und Informationen sind im Rahmen der Bestandsführung besonders vorteilhaft nutzbar. Insbesondere in den Intensivkulturen wie Obst, Wein und Hopfen werden viele unterschiedliche Maßnahmen eingesetzt und kombiniert, um ein bestimmtes Produktionsziel, beispielsweise Schnitt, Binden, Entlauben, Ausdünnen der Früchte, Bewässerung, Düngung o.ä., zu erreichen. Für die Entscheidung zum Einsatz bestimmter Maßnahmen oder Kombinationen von Maßnahmen ist einerseits die aktuelle Situation in der Kultur, andererseits aber auch die zukünftig zu erwartende Entwicklung der Pflanzen selbst sowie der Umgebungsbedingungen wie Witterung usw. von Bedeutung.
Wenn der Landwirt, der die Entscheidung zu treffen hat, auf präzise Informationen aus der Vergangenheit seines Pflanzenbestandes zurückgreifen kann, wird seine Entscheidung fundierter und das Risiko von Fehlentscheidungen minimiert. Technisch exakte und reproduzierbare Messungen relevanter Größen von Pflanzen, die vollständig dokumentiert über lange Zeit verfügbar bleiben und leicht erschlossen werden können, sind in dieser Hinsicht von großem Nutzen. Kulturen wie Wein oder Obst werden vom Menschen seit Jahrtausenden mit pflanzenbaulichen Maßnahmen wie Züchtung, Erziehung und Pflege intensiv den örtlichen Gegebenheiten (Boden, Klima, Standort) angepasst und damit kultiviert.

Mit Hilfe des erfindungsgemäßen Verfahrens und auch des Sensors werden georeferenzierte, ortspezifische Daten von Pflanzen erfasst, die als Basis für eine ortsangepasste Kultur, mit einer auf die Einzelpflanze ausgerichteten Optimierung der Behandlung dienen können. Beispielsweise kann mit dem erfindungsgemäßen Verfahren die Wirkung des eingesetzten Pflanzenschutzmittels und/oder sonstiger Kulturmaßnahmen an den behandelten Pflanzen unter den herrschenden Bedingungen (Sorte, Erziehung, Pflege, Düngung, Klima, Witterung) individuell bestimmt werden. Mit diesen Informationen wird es möglich, die Dosis für zukünftige Behandlungen in demselben Pflanzenbestand bei vergleichbarer Indikation so zu bestimmen, dass die Dosis und der Anwendungszeitpunkt dieses oder jenes Präparates oder der Maßnahme hinsichtlich Kosten und Wirkung, aber auch hinsichtlich Resistenzinduktion und Prosperität optimiert werden kann. Dies erlaubt auch die lokale Dosierung in individuellen Teildosen bei verschiedenen Behandlungsmaßnahmen oder Positionierung und Führung von Bearbeitungsmaßnahmen in Abhängigkeit von der tatsächlich erzielten Wirkung an einer Einzelpflanze an ihrem individuellen Standort. Mit dem erfindungsgemäßen Verfahren ist es möglich, sowohl örtliche Verteilungen biologischer und phytophysiologischer Signaturen zu erheben als auch zeitliche Verteilungen mit jeder Fahrt durch den Bestand aufzunehmen. Es ist damit möglich, die Einflussmächtigkeit und damit die Wirkung von Maßnahmen unter den jeweils herrschenden Randbedingungen pflanzenindividuell zu erfassen und zu verfolgen. Mit der zeitlichen Messung kann auch der Einfluss der Witterung auf die Wirkung über die Jahre verglichen und letztlich bewertet werden.

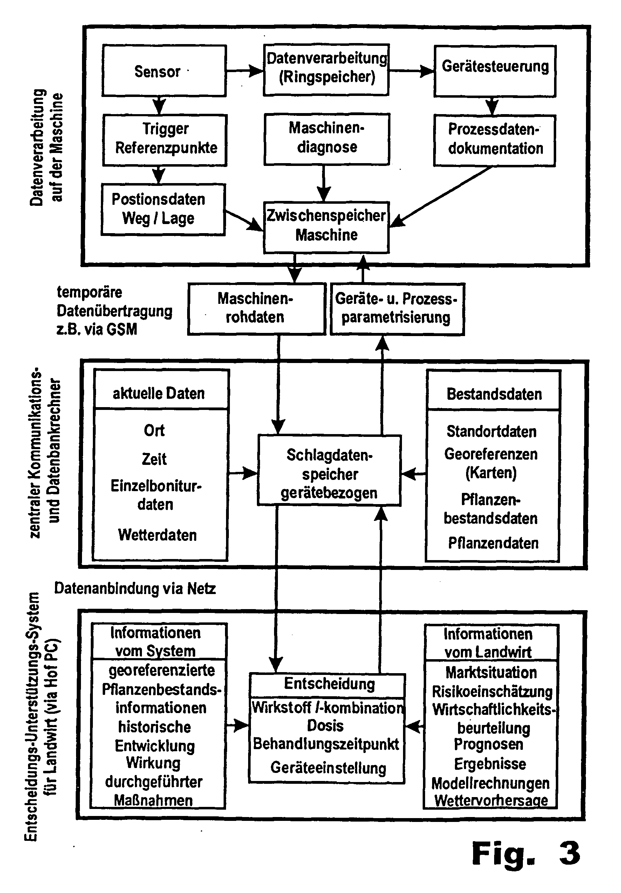

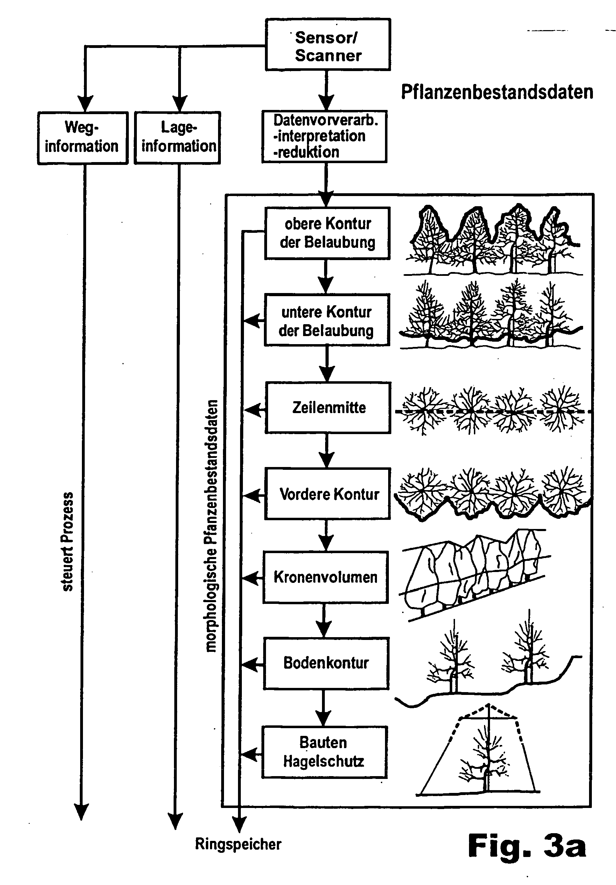

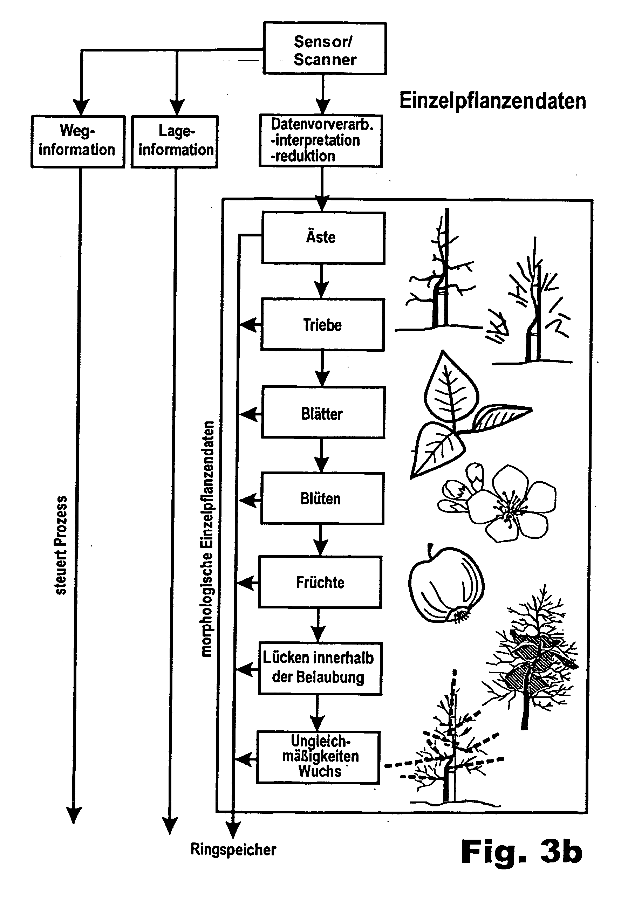

Mit dem erfindungsgemäßen Verfahren, dessen Ablauf in der Fig. 3, 3a und 3b schematisch gezeigt ist- werden die unterschiedlichen Pflanzenbestände räumlich erfasst und in morphologischer und physiologischer Hinsicht charakterisiert. Es werden folgende morphologische Größen der Pflanzen eines Bestandes ermittelt:
- Ort von Objekten, Abstand und Winkel des Objektes vom Sensor,
- Kontur der Laubkronen (aus dem Verlauf der Abstände),
- Volumen der Kronen aus der Kontur (basierend auf der Annahme, dass die Ziele im wesentliche symmetrisch zur Reihenmitte hin aufgebaut sind),
- Reihenmitte aus der Lage der Triebspitzen und der Stämme/Stöcke relativ zur Fahrgasse,
- Dichte aus der Abstandsverteilung relativ zum dominierenden Vorderseitensignal (Blicke durch die Struktur der Laubwand mit Treffern auf der Rückseite unter Ausschluss der Treffer ferner liegender Objekte durch Hintergrundausblendung),
- Dichte, insbesondere Belaubungsdichte, d.h. Flächenschluß der Blätter in der Laubwand bei gerüstbildenden Kronen (Obstbäume),
- Triebwachstum aus dem zeitlichen Vergleich der Kontur und des Volumens,
- Fruchtanzahl bei ausreichender Fruchtgröße,
- Ertrag aus Fruchtanzahl pro Fläche und pro Pflanze.

An physiologischen Größen werden erfasst:
- Farbe aus dem Pegel des Reflexionssignals, basierend auf der Annahme, dass die Objekte ähnlich gefärbt, im vergleichbaren Abstand zum Sensor und vergleichbar reflektierend sind. Dabei interessiert nicht die absolute Farbe, sondern der relative Verlauf des Signals als ein Maß für die Sättigung des grünen Farbstoffes und damit der Anzahl der Chlorophyllzellen. Diese Verteilung gibt einen Hinweis auf die Ernährungssituation bzw. der Verteilung derselben auf Der Fläche. Aus der Farbverteilung wird insbesondere bei der Blüte von Obstbäumen die Verteilung der Blütendichte als Indikator für die Alternanz der Bäume ermittelt und mit einer angepassten Behandlung berücksichtigt werden.
- Vitalität abgeleitet aus der Farbverteilung,
- Vitalität auf der Basis des Fluoreszenzspektrums durch Auswertung der Reflexionsstrahlung.

Bei bekanntem Abstand eines Objektes ist der Reflexionspegel des empfangenen Signals ein Maß für die Farbe, Orientierung und optische Beschaffenheit (Oberfläche) des reflektierenden Objektes. Mit der Analyse des Signalpegels kann eine Verteilung der optischen Signatur über der Fläche bestimmt werden, die als Maß für die Vitalität genutzt werden kann.

Natürliches pflanzliches Grün reflektiert NIR-Licht deutlich besser als andere Objekte (Grün-Peak im Reflexionsspektrum). Dies ist abhängig von der Sorte, der Ernährungssituation der Pflanzen bzw. dem Reifegrad der Früchte usw. Werden die Reflexionsgrade unterschiedlicher NIR-Spektren verglichen, kann zwischen chlorophyllhaltigen belebten Pflanzenteilen und weniger chlorophyllhaltigen Objekten wie reifende Früchte bzw. nichtchlorophyllhaltigen Objekten wie Zaunpfählen unterschieden werden.
Die Auswertung und Nutzung von Signalpegelinformationen setzt voraus, dass Einflüsse des Abstandes zum Zielobjekt, die infolge der Strahlaufweitung zu abnehmenden Signalpegeln bei zunehmenden Abstand führen, berücksichtigt werden.

Unterschiede im Reflexionssignalpegel werden dann quantifizierbar, wenn die Abstandsinformation berücksichtigt und unterstellt wird, dass es sich um vergleichbare Zielobjekte, beispielsweise Blätter eines vergleichbaren Vegetationsstadiums bei einer Fahrt durch den Bestand, handelt. Signalpegelmesswerte aus vergleichbarer Messentfernung liefern im wesentlichen Aussagen über farbabhängige Kultureigenschaften, die bei der Behandlung berücksichtigt werden können. Ohne eine Differenzierung unterschiedlicher Spektren kann indirekt über den räumlichen Verlauf des Reflexionssignalpegels auf die Verteilung der Vitalität anhand der Chlorophyllaktivität geschlossen werden.

Ein Laserstrahl trifft bei der Bestrahlung einer natürlichen Laubwand zufällig einzelne oder mehrere Blätter oder Triebe. Dies erfordert eine besondere Zuordnung der korrespondierenden Entfernungsinformationen zu den einzelnen vom Strahl tangierten Objekte. Hierzu werden gleichzeitig mehrere Zeitglieder gestartet, wenn der Strahl gesendet wird. jedes Zeitglied hat einen anderen Niveauwert, bei dem die Zeit gestoppt wird (Kaskade). Damit werden mehrere Laufzeiten für unterschiedliche Reflexionspegel gemessen. Die Distanz der teilweise tangierten Objekte ist damit bestimmt. Mit Hilfe einer solchen Anordnung ist erkennbar, ob ein Reflexionspegel von einem Zielobjekt allein zurückgestrahlt wird oder von verschiedenen Objekten, wodurch der Aussagewert gemindert wird. Die Vitalitätsaussage wird deshalb allein aus den gesicherten Reflexionswerten einzelner Objekte gebildet.

Die Objektfarbe in pflanzlichen Kulturen variiert innerhalb eines Bestandes im Grünbereich (gelb-grün, tiefgrün, blaugrün usw.) oder in einem blühenden Apfelbestand im Weiß-Rosa-Bereich.

Es kann davon ausgegangen werden, dass bei großräumig auftretenden Farbvariationen bzw. Signalvariationen pflanzenbauliche oder standortbedingte Ursachen zugrunde liegen. Kleinräumig ausgeprägte Unterschiede weisen auf pflanzenphysiologische Ursachen hin, die Basis für die Applikationsentscheidung oder Auswahl der durchzuführenden pflanzenbaulichen Maßnahme und der Verfahrensweise sind.

Natürliche Blätter fluoreszieren, wenn sie mit Laserlicht bestrahlt werden. Aus dem Signalpegel und der Frequenz kann ebenfalls auf die Vitalität geschlossen werden.

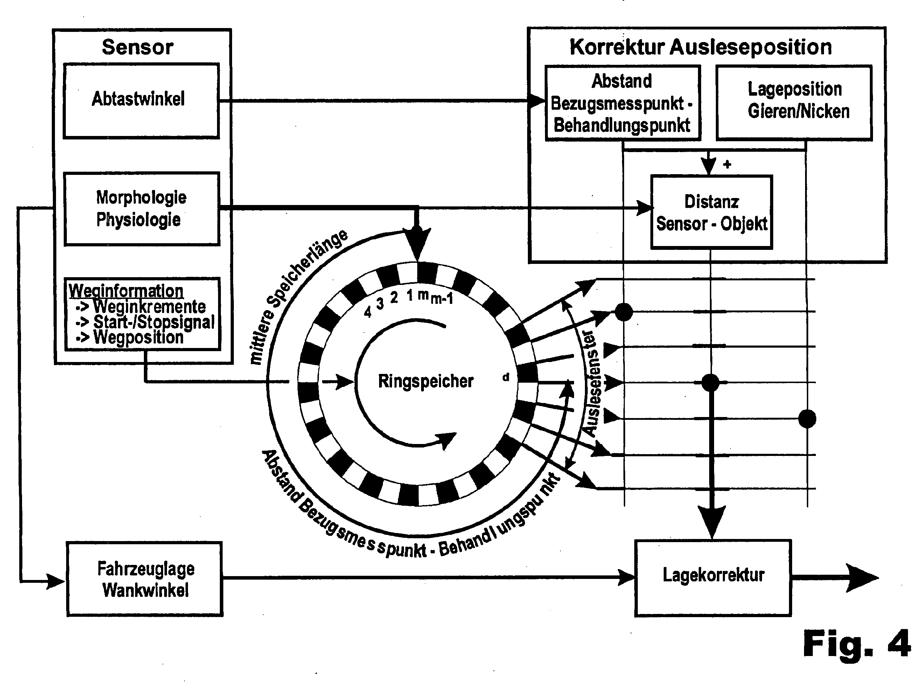

In Fig. 3, 3a und 3b ist der Ablauf des erfindungsgemäßen Verfahrens schematisch verdeutlicht. Der Bestand an Pflanzen wird mit dem Lasersensor **3** wie vorstehend beschrieben abgetastet und die Wege-, Lage- und Zielortdaten als Bestandsdaten in einer Datenvorverarbeitung interpretiert und eine Datenreduktion durchgeführt. Aus diesen Daten wird die obere Kontur des Bestandes einschließlich Lücken ermittelt. Es schließt sich die Bestimmung der unteren Kontur an. In den weiteren Arbeitsschritten wird die Mittelebene, das Kronenvolumen, die vordere Kontur und Ungleichmäßigkeiten (Fig. 3b) bestimmt. Alle diese Daten werden konditioniert einem Ringspeicher zugeführt und zwischengespeichert. Der Ringspeicher wird von Position zu Position versetzt, wobei die Anzahl der Inkremente des Ringspeichers größer ist als die Anzahl der Inkremente, die dem Abstand zwischen Sensor und Düse entsprechen würde. Es existieren eine Vielzahl von Ringspeicher für unterschiedliche Datenanteile. Die unterschiedlichen Ringspeicher geben die Daten verschiedener Ringspeicherpositionen frei. Die für die jeweilige Behandlungsposition erforderlichen Daten werden aus den Ringspeichern ausgewählt, wobei die Position des Ringsspeichers von der Wegposition, Lageposition, von der Distanz zum Ziel und von der Höhe der zu berücksichtigenden Position (Strahlverformung) bestimmt wird (siehe Fig. 4).

### Beispiel 2

Das erfindungsgemäße Verfahren soll zur Behandlung oder Bearbeitung solcher Pflanzen zum Einsatz kommen, die eher regellos nicht in Reihen verteilt wachsen. Zunächst wird eine Bezugsfahrspur durch eine erste Befahrung des Bestandes anhand von entlang der Fahrspur vorhandenen markanten Objekten (Bäume o dgl.) erzeugt. Die Ortung dieser Objekte erlaubt eine wiederholte Befahrung dieser Spur, beispielsweise im Hochwald, in alten Olivenhainen oder Zitrusgärten.
Mit dem Sensor **3** wird der große Baum vermessen und beurteilt. Bei der Vorausfahrt überstreicht das Lichtpunktgitter seitlich vorausliegende vertikale Objekte in enger räumlicher Abfolge. Die geneigte Scan-Ebene führt dazu, dass ein Stamm von oben nach unten scheibenweise, im oberen Bereich schräg von oben nach unten hin immer horizontaler vermessen wird.
Aus der so ermittelten räumlichen Halbschale des Stammes und der daraus hervorgehenden Äste ist es möglich, das nutzbare Volumen und die Länge gerader Abschnitte zu bestimmen. Der Zuwachs von Holz und damit die individuelle Wachstumsleistung jedes Baumes lässt sich somit durch wiederholte Messungen in ausreichendem zeitlichen Abstand bestimmen.

Wird der Sensor **3** für die Beurteilung von Alleebäumen hinsichtlich der in das sogenannte Lichtraumprofil hineinragender Äste eingesetzt, kann der Schnitt der Äste mit einer auf den individuellen Wuchs des Einzelbaumes abgestellten Auswahl, beispielsweise nach unterschiedlichen pflanzenbaulichen, sicherheitstechnischen oder technischen Gesichtspunkten, ausgerichtet werden, wobei Totäste in jedem Fall entfernt, alte stark hängende Äste eingekürzt oder jüngere Seitentriebe gezielt gefördert werden.
Mit dem 3D-Abbild der Szenerie kann durch das erfindungsgemäße Verfahren die manuelle Tätigkeit der Baumpflege automatisiert und in unterschiedliche Richtungen optimiert werden.
Vergleichbare Anwendungen sind mit dem erfindungsgemäßen System bei der Ernte von großen Pflanzen wie Bananenstauden, Kakaobäumen oder in Naturkautschukplantagen möglich.
Die genannten Anwendungen des erfindungsgemäßen Lösung folgen einer bestimmten Fahrspur, von der aus die Pflanzen detektiert, lokalisiert und vermessen werden. Mit der dann - wie zuvor näher beschriebenen Positionsbestimmung der Pflanzen wird die Fahrspur später im unbefestigten Gelände reproduziert. Aus der Basis einer Vielzahl zu unterschiedlichen Zeitpunkten ermittelten räumlichen Szenerien der umgebenden Pflanzen erfolgt die Bewertung und die Auswahl der auszuwählenden Maßnahmen wie das Entfernen bestimmter Pflanzen (Bäume), Pflanzenteile (Äste, Früchte usw.).

### Beispiel 3

Eine augenscheinlich andere Anwendung des erfindungsgemäßen Verfahrens, nämlich das Lesen von Trauben, folgt dem in Beispiel 2 dargelegten Vorgehen. Ein Träger **1** befährt wiederholt gleiche Fahrspuren und ermittelt morphologische und physiologische Signaturen der umgebenden Reben. Aus dem Vergleich der einzelnen Trauben werden diejenigen identifiziert, die auf Grund ihres Reflexionsniveaus und der Größe für einen bestimmten Geschmack, Reifezustand und Inhaltsstoff stehen.
Mit der Lokalisierung dieser Trauben liegen geometrische Ortsdaten relativ zum Sensor **3** vor, die für die Ansteuerung eines Erntegreifers einschließlich Schere für die Lese von Tafeltrauben oder von Auslesewein nutzbar sind.
Die mechanische Traubenlese mit sogenannten Traubenvollerntern erfordert vom Fahrer hohe andauernde Konzentration, um den Vollernter über der Pflanzenzeile mittig so zu fahren, dass die von beiden Seiten auf die Pflanzenzeile einwirkenden Schüttelorgane symmetrisch, für das Lesegut und die Rebanlage schonend wirken.
Das erfindungsgemäße System ermöglicht es, den Vollernter zwischen den Reben so zu führen, dass die Eingriffsgeometrie der Schüttelorgane gleichbleibend pflanzenindividuell erfolgt. Da die Trauben in unterschiedlichen Höhen, Dichten und Mengen an den Rebstöcken reifen, steigert eine gezielte räumliche Führung der Leseorgane eines Vollernters die nutzbare Ausbeute an unversehrtem Lesegut (Beeren) nachhaltig, weil weniger Reblaub und Pflanzenteile abgeschüttelt werden.
Die Traubenlese kann durch die Nutzung physiologischer Daten der Trauben in mehreren, insgesamt schonenderen Teilvorgängen, beispielsweise Vorlesen und Abschlusslesen, durchgeführt werden.

Analog zur Lese erfolgt das Binden der aus der Zeile emporwachsenden Weintriebe mittels eines über die Zeile hinweggreifenden Bindegerätes. Diese Geräte sind vorn am Träger montiert und im Sichtfeld des Fahrers angeordnet, damit dieser die Führung entlang der Zeile mittels der Lenkung übernimmt. Unebenheiten der Fahrspur konnte der Fahrer bisher weder erkennen, noch berücksichtigen. Kollisionen mit den Pflanzen und der Anlage einschließlich der damit einhergehenden Schäden waren deshalb nicht zu vermeiden. Mit der erfindungsgemäßen Lösung wird das Bindegerät so über und entlang der Zeile geführt, dass alle überhängenden Teile erfasst, Kollisionen mit den Pfählen der Anlage und den Abspanndrähten sicher vermieden werden.

### Beispiel 4

Das erfindungsgemäße Verfahren soll in Obstanlagen zum Einsatz kommen. Alle bisherigen Maßnahmen vom Schnitt, Binden und zur Ernte beziehen sich auf die Einzelfrucht, den Einzelzweig oder Ast. Schnittmaßnehmen an Obstbäumen werden im wesentlichen in der winterlich kahlen Obstanlage durchgeführt. Die dann vorherrschende Transparenz der gerüstbildenden Obstbäume erlaubt die Vermessung und Beurteilung der Äste und Zweige. Die pflanzenbauliche Bewertung jedes Zweiges setzt die Kenntnis seines Ertragsalters, seiner Ausbildung und Orientierung relativ zum Stamm und seine Stellung zum Saftfluss voraus. Sofern die Historie des Zweiges an einer Einzelpflanze bei der Schnittmaßnahme verfügbar ist, kann die Ertragsleistung zusätzlich zu den sichtbaren Blütenknospen präzisiert und qualifiziert werden. Die Lokalisierung eines Arbeitsgerätes zum Schnitt ausgehend vom Träger ist mit Hilfe der zuvor beschriebenen 3D-Daten auf gleicher Weise möglich wie bei der Einzeltraubenlese oder beim gezielten Entblättern oder bei der Apfel/Zitrus/Fruchternte möglich.
Bei der Bearbeitung von Obst- oder Weinanlagen mit dem erfindungsgemäßen Verfahren wird die Bodenbearbeitung und die Unterwuchspflege in die Bestandsführung miteinbezogen.
Mit dem in Fig. 4 näher beschriebenen Ringspeicher erfolgt die Steuerung von Bodenpflege- und Unterwuchspflegewerkzeugen in gleicher Weise wie das ausführlich dargestellte Ausbringen von Düngemitteln bzw. Wirkstoffen.

### Aufstellung der verwendeten Bezugszeichen

| | |
|---|---|
| Fahrbarer Träger | 1 |
| Sprüheinrichtung | 2 |
| Lasersensor | 3 |
| Umlenkspiegel | 4 |
| Formspiegel | 4' |
| Kreissegment von | 5, 6 |
| Strahlquelle | 7 |
| Empfänger | 8 |
| Optik | 9 |
| Strahlengang | 10 |
| Drehachse von 4' | A |
| Positionen des Sensors 3 | S1...SN |
| Obere Tastebene | TR |
| Untere Tastebene | TU |

## Patentansprüche

1. Verfahren zum bedarfsgerechten und volumenspezifischen Beeinflussen von Boden und Pflanzen, insbesondere durch Ausbringen/Dosieren von Sprühmitteln wie Pflanzenschutz- und/oder Düngemittel sowie Wasser, Bearbeiten des Bodens, Unterwuchspflege und/oder Bearbeitung und Behandlung der Pflanze, auf mit Bäumen wie Allee- oder Waldbäumen o. dgl., Raumkulturen, insbesondere Wein- und Obstkulturen, Hopfen, Zitrus, Oliven o. dgl., Sträuchern oder mit Stauden wie Bananen o. dgl. regelmäßig oder unregelmäßig bepflanzten Arealen, bei dem die Pflanzen mit durch auf einem befahrbaren Träger befestigten, an den Pflanzen umlaufend vorbeigeführten Einzelsensor erzeugte monochromatische pulsierende Laserstrahlen abgetastet werden, das vom Blattwerk reflektierte Strahlungsspektrum von diesem Sensor aufgenommen und das erfasste Spektrum in optische Signale umgewandelt wird und diese Signale einem Rechner zugeführt werden, der die Signale speichert, auswertet und das Ausbringen/Dosieren der Sprühmitteldosis in Abhängigkeit des Vegetationszustandes, das Bearbeiten des Bodens und der Pflanze sowie die Ernte durch Ausgeben von Schaltbefehlen zum Betätigen der dem fahrbaren Träger zugeordneten Sprüheinrichtungen und Gebläse und/oder Bearbeitungsgeräte steuert, mit folgenden Schritten
a) Erzeugen einer Bezugsfahrspur im Areal mit einer ersten Befahrung durch Orten und Lokalisieren von charakteristischen Bezugsobjekten wie Pflanzen, Pflanzpfähle, Bebauung usw. neben der Fahrspur;
b) Abtasten der Pflanzen in Bezug auf die Bezugsfahrspur durch Aussenden eines oszillierenden gepulsten Laserstrahls auf einer etwa horizontal oder leicht geneigten Bahn vor, seitlich und über dem Träger in einer auf einem, in Fahrtrichtung sich öffnenden Kegelmantelsegment liegenden Raumkurve, die die Pflanzenreihen bei Vorausfahrt des Trägers etwa spiralförmig erfassen, wobei der Laserstrahl ein räumlich hochaufgelöstes Lichtpunktgitter auf den Pflanzen in unterschiedlichen Tastebenen erzeugt;
c) Starten eines oder mehrerer Zeitmessglieder zeitgleich mit dem Aussenden des Laserstrahles gemäß Schritt b), wobei den Zeitmessgliedern unterschiedliche Niveauwerte zugeordnet sind;
d) Stoppen der Zeitmessglieder zum Bestimmen der unterschiedlichen Reflexionspegel der von dem Lichtpunktgitter reflektierten Strahlungsanteile zum getrennten und/oder gemeinsamen Ermitteln von Weg-, Lage- und Zielortdaten, Aufnehmen der Strahlungsanteile durch den die Strahlung aussendenden Sensor sowie Zuführen der Signale über eine die Laufzeit der Signale ermittelnde, die Signale in Daten umwandelnde Empfangseinheit an den Rechner und Ablegen der Daten in einen Ringspeicher des Rechners;
e) Bestimmen der morphologischen und physiologischen Kennwerte des Pflanzenbestandes und/oder der einzelnen Pflanzen aus den Daten gemäß Schritt d) und
f) Korrigieren der Lage der Sprüheinrichtungen und des Gebläses oder der Bearbeitungsgeräte durch Ausgleich der Abweichungen in den Wege-, Lage- und Zielortdaten infolge von Wank-, Schlängel- und/oder Nickbewegungen des Trägers und
g) Ermitteln der Dosierung, der Art und des Umfanges der Bearbeitung entsprechend Schritt e) und f) sowie Ansteuern der Sprüheinrichtungen zum Ausbringen des Sprühmittels und/oder der Bearbeitungsgeräte.

2. Verfahren nach Anspruch 1, **dadurch gekennzeichnet, dass** als Laserstrahlung eine Strahlung mit einer Wellenlänge von 700 bis 1000 nm verwendet wird.

3. Verfahren nach Anspruch 1, **dadurch gekennzeichnet, dass** aus den Daten des Schrittes d) Informationen zur Zielfläche der Pflanzen, zur Pflanzung, Struktur und Topographie des Bestandes und des Untergrundes, vorzugsweise Einzelpflanzen als Individuum, Gesamtbestand als Ganzes, Fremdobjekte im Bestand, obere und untere Kontur der Laubwand einschließlich Lücken, vordere horizontale Querschnittskontur der Zeile, Mittelebene der Zeile, Querschnittsprofil, Volumen der Zeile und der Einzelkrone und Unregelmäßigkeiten, ermittelt werden.

4. Verfahren nach einem der Ansprüche 1 bis 3, **dadurch gekennzeichnet, dass** mit dem Sensor Teile der Pflanze, beispielsweise Blätter, Ranken, Äste, Stängel, Triebe, Stämme, Stöcke, Früchte und Blüten, erkannt werden.

5. Verfahren nach einem der Ansprüche 1 bis 3, **dadurch gekennzeichnet, dass** mit dem Sensor Objekte, beispielsweise Stützgerüste, Pfosten oder Abspannungen, erkannt werden.

6. Verfahren nach einem der Ansprüche 1 bis 3, **dadurch gekennzeichnet, dass** mit dem Sensor die Umgebung, vorzugsweise der Boden, das Bodenprofil, Geländemarken, Gebäude, Bauwerke, Mauern, Wege und Einfriedungen, erkannt werden.

7. Verfahren nach einem der Ansprüche 1 bis 6, **dadurch gekennzeichnet, dass** mit dem Sensor eine berührungslose Wegmessung durchgeführt wird.

8. Verfahren nach einem der Ansprüche 7, **dadurch gekennzeichnet, dass** bei der Fahrt des Trägers durch den Bestand die Wegmessung an signifikanten Orten, vorzugsweise der Zeilenanfang, auf Null gesetzt wird.

9. Verfahren nach Anspruch 7, **dadurch gekennzeichnet, dass** die aktuellen Positionen des Trägers nach einer ersten Befahrung durch den Bestand mit den bekannten Positionen und Grundformen des Bestandes verglichen und korrigiert werden.

10. Verfahren nach Anspruch 7 bis 9, **dadurch gekennzeichnet, dass** mit der Wegmessung Differenzen in den Messwerten der linken und rechten Reihe des Bestandes der Bezugsfahrspur ermittelt und Bewegungen um die Hochachse und Kurvenfahrten festgestellt werden.

11. Verfahren nach Anspruch 7 bis 10, **dadurch gekennzeichnet, dass** die Weginformation zur Bestimmung des Weges aus einem Erkennen von Baumstämmen, Rebstöcken und/oder Pflanzpfähle gewonnen wird.

12. Verfahren nach Anspruch 7 bis 10, **dadurch gekennzeichnet, dass** die Weginformation zur Bestimmung des Weges aus einem Verfolgen der Triebspitzen der Einzelpflanze gewonnen werden.

13. Verfahren nach Anspruch 7 bis 10 **dadurch gekennzeichnet, dass** Weginformation zur Bestimmung des Weges aus einem Verfolgen der vorderen horizontalen Querschnittskontur gewonnen wird.

14. Verfahren nach Anspruch 7 bis 10, **dadurch gekennzeichnet, dass** die Wegmessung durch ein Verfolgen vertikaler Objekte während der Fahrt durch das Tastfeld des Sensors durchgeführt wird, wobei die Objekte in unterschiedlichen Höhen zeitlich nacheinander versetzt erfasst werden und die ermittelten Zeitintervalle ein Maß für die Geschwindigkeit ergeben.

15. Verfahren nach Anspruch 7, **dadurch gekennzeichnet, dass** die Wegmessung unabhängig von der Fahrgeschwindigkeit durchgeführt wird.

16. Verfahren nach Anspruch 7 bis 15, **dadurch gekennzeichnet, dass** alle Auswertemethoden für die Bestimmung der Weginformation untereinander und mit alten Bestandsdaten korreliert werden.

17. Verfahren nach Anspruch 1 bis 6, **dadurch gekennzeichnet, dass** die Lage des Sensors entlang der Fahrstrecke in der Position S₁ gemessen und gespeichert wird.

18. Verfahren nach Anspruch 17, **dadurch gekennzeichnet, dass** die Lage des Sensors und des fahrbaren Trägers fortwährend entlang der Wegstrecke an allen Positionen S₂ bis S_{N} gemessen wird.

19. Verfahren nach Anspruch 17 und 18, **dadurch gekennzeichnet, dass** die aktuell gemessene Lage des Trägers und die Lage der gespeicherten Position S₁ des Sensors verglichen wird, sobald der Träger einen Weg S_{X} zurückgelegt hat, der dem Abstand zwischen dem Sensor und den Düsen und/oder Arbeitsgeräten entspricht.

20. Verfahren nach Anspruch 1, 15 bis 19, **dadurch gekennzeichnet, dass** die Lage der Achse des Trägers relativ zum Rahmen zwecks Ausgleich von Wankbewegungen korrigiert wird.

21. Verfahren nach Anspruch 1, 15 bis 19, **dadurch gekennzeichnet, dass** die Lage des Trägers um die Hochachse zum Ausgleich von Schlängelbewegungen verstellt wird.

22. Verfahren nach Anspruch 1, 15 bis 19, **dadurch gekennzeichnet, dass** die Lage der Trägerquerachse zum Ausgleich von streckenrelevanten Fehlern durch Vor- und Zurückverlagern der Sprühzone (Nicken) relativ zum Drehpunkt verstellt wird.

23. Verfahren nach Anspruch 1 bis 6, **dadurch gekennzeichnet, dass** die Lage des Zielortes durch Messen der Distanzen zwischen Zielfläche und Sensor bestimmt wird.

24. Verfahren nach einem der vorhergehenden Ansprüche, **dadurch gekennzeichnet, dass** das Bearbeiten des Bodens ein Lockern, Krümeln, Häufeln, Beeinflussen der Verdunstung und/oder Temperatur umfasst.

25. Verfahren nach einem der vorhergehenden Ansprüche, **dadurch gekennzeichnet, dass** die Unterwuchspflege durch Mähen, Mulchen, Häckseln, einen Erosionsschutz, eine Beschattung, Abdeckung und/oder Mikroklimabeeinflussung durchgeführt wird.

26. Verfahren nach einem der vorhergehenden Ansprüche, **dadurch gekennzeichnet, dass** das Bearbeiten der Pflanzen ein Schnitt, Binden, Formieren, Stammputzen, Ausbrechen, Ringeln, Wurzelschnitt und/oder Ernten umfasst.

27. Verfahren nach Anspruch 26, **dadurch gekennzeichnet, dass** der Schnitt ein Grobschnitt, Feinschnitt, Formschnitt, Entlauben, Gipfeln, Cordonschnitt, Hopfenschnitt und/oder Obstgehölzeschnitt ist.

28. Verfahren nach Anspruch nach einem der vorhergehenden Ansprüche, **dadurch gekennzeichnet, dass** bei der Fruchternte nach Weinernte oder Obsternte unterschieden wird.

29. Verfahren nach einem der vorhergehenden Ansprüche, **dadurch gekennzeichnet, dass** mit dem Auswählen eine Unterscheidung nach Fruchternte, Triebe und/oder Pflanzenorgane durchgeführt wird.

30. Verfahren nach einem der vorhergehenden Ansprüche, **dadurch gekennzeichnet, dass** mit dem Sortieren eine Unterscheidung nach Früchten und/oder Klassierung der Früchte durchgeführt wird.

31. System zur Durchführung des Verfahrens nach Anspruch 1, mit einem fahrbaren Träger, beispielsweise Fahrzeug und/oder angekoppelte Arbeitsmaschinen, einem am Träger befestigten Sensor mit Strahlungsquelle zum Aussenden eines Impulslaserstrahles, einem um eine vertikale Achse drehbaren Spiegel zum Ausrichten des Strahles auf eine Laubwand, einen Strahlungsempfänger zum Empfangen der von der Laubwand reflektierter Strahlen, einem Rechner zum Verarbeiten der reflektierten Strahlung und zum Ansteuern einer am Träger befestigten Düsen aufweisenden Sprüheinrichtung mit Vorratsbehälter für das Sprühmittel, wobei die Düsen im deutlichen Abstand von dem Sensor angeordnet ist, eine Flüssigkeitspumpe zum Fördern des Sprühmittels zu den Düsen, Ventilen zum Öffnen und Schließen der Düsen und ein Gebläse zum Erzeugen einer Zweiphasenströmung, **dadurch gekennzeichnet, dass** der Spiegel (4') als ein Formspiegel ausgebildet ist, dessen Teilbereiche (5,6) mit unterschiedlichem Winkel geneigt zur Drehachse (A) angeordnet sind, und dass die Drehachse des Spiegels (4') exzentrisch zum Strahlengang (10) des Sendestrahles und Empfangstrahles angeordnet ist.

32. System zur Durchführung des Verfahrens nach Anspruch 1, mit einem fahrbaren Träger, beispielsweise Fahrzeug und/oder angekoppelte Arbeitsmaschinen, einem am Träger befestigten Sensor mit Strahlungsquelle zum Aussenden eines Impulslaserstrahles, einem um eine vertikale Achse drehbaren Spiegel zum Ausrichten des Strahles auf eine Laubwand, einen Strahlungsempfänger zum Empfangen der von der Laubwand reflektierter Strahlen, einem Rechner zum Verarbeiten der reflektierten Strahlung und zum Ansteuern mindestens eines am Träger befestigten Bearbeitungsgerätes, wobei die Bearbeitungsorgane im deutlichen Abstand von dem Sensor angeordnet sind, **dadurch gekennzeichnet, dass** der Spiegel (4') als ein Formspiegel ausgebildet ist, dessen Teilbereiche (5,6) mit unterschiedlichem Winkel geneigt zur Drehachse (A) angeordnet sind, und dass die Drehachse des Spiegels (4') exzentrisch zum Strahlengang (10) des Sendestrahles und Empfangstrahles angeordnet ist.

33. System nach Anspruch 31 und 32, **dadurch gekennzeichnet, dass** der Spiegel (4') aus tortenförmigen Kreissegmenten gebildet ist, von denen ein Segment vorzugsweise einen Neigungswinkel von 45° und ein weiteres Segment einen Neigungswinkel von 1 bis 45°, vorzugsweise 15°, gegenüber der Normalen der Drehachse (A) des Spiegels aufweist.

34. System nach Anspruch 31 bis 33, **dadurch gekennzeichnet, dass** der Strahlengang (10) koaxial zur Drehachse (A) des Spiegels (4') angeordnet ist.

35. System nach Anspruch 31 bis 34, **dadurch gekennzeichnet, dass** die Strahlenquelle (7) mit mindestens einem durch einen Lichtimpuls auslösbaren Zeitmessglied versehen ist.

36. Vorrichtung nach Anspruch 31 bis 35, **dadurch gekennzeichnet, dass** der Empfänger (8) mit mindestens einer Einrichtung zum Erfassen der Laufzeit versehen ist.

37. System nach Anspruch 31 bis 36, **dadurch gekennzeichnet, dass** die Optik (9) für die Strahlausbildung raumfest zwischen Strahlungsquelle/ Empfänger (7;8) und Spiegel (4) angeordnet ist.

38. System nach Anspruch 31 bis 37, **dadurch gekennzeichnet, dass** der Sensor (3) die Bewegungen des Trägers während der Fahrt verzögerungsfrei vollzieht.

39. System nach Anspruch 31 bis 37, **dadurch gekennzeichnet, dass** die Achse des Sensors (3) vorzugsweise in Fahrtrichtung nach vorn geneigt angeordnet ist.

40. System nach Anspruch 32, **dadurch gekennzeichnet, dass** als Bearbeitungsgeräte Schneid-, Grab-, Grubber-, Unterschneid-, Binder-, Formier-, Ausbrech-, Schüttel-, Sortier- und Vollernteeinrichtungen vorgesehen sind.

## Claims

1. Method of treating the ground and plants as required and in a volume-specific manner, especially by the application/metering of spray agents like plant-protective agents and/or fertilizers as well as water, the working of soil, undergrowth and/or the working and treatment of the plants, of trees such as trees along roadways or forest trees or the like, in limited area cultivations, especially grape and fruit cultivation, hops, citrus, olives or the like, shrubs or bushes like bananas or the like in uniformly or nonuniformly planted areas in which the plants are scanned with a monochromatic pulsed laser beam produced by an individual sensor dispiaced past the plants and circulating onto the plants while affixed to a mobile carrier, the radiation spectrum reflected from the leaf structures being picked up by this sensor and the acquired spectrum being converted into optical signals and these signals being fed to a computer which stores the signals, evaluates them and controls the application/dosing of the spray agent doses as a function of the vegetation state or controls the working of the soil and the treatment of the plants as well as the harvest by outputting of switching commands to control the spray device arranged upon the mobile carrier and blowers and/or working implements with following steps:
a) generating a reference track in the area with a first transit with determination of the positions and localization of characteristics referenced objects like plants, plant stakes, cultivation sites and so forth adjacent the track,
b) scanning the plants in reference to the reference track trace by transmitting an oscillating pulsed laser beam in a somewhat horizontal or slightly inclined path forwardly, laterally and above the carrier in a conical surface segment open in the direction of travel and forming a space curve which encounters the plant rows by forward travel of the carrier in a somewhat spiral shape, whereby the laser beam produces in space a highly resolved light point grid or raster upon the plants in different scanning planes,
c) starting one or more time-measurement circuits simultaneously in time with the emission of the laser beam according to step b) whereby the time measurement circuits are associated with different time values,
d) stopping the time measurement circuits upon determination of the different reflection levels of the reflected radiation components from the light point grid or raster for separate and/or common determination of travel data, position data and target location data, picking up the radiation component through the sensor transmitting the radiation and feeding the signals over a receiver unit which determines the transit times of the signals from the signals in the converted data of the computer and depositing the data in a ring memory of the computer,
e) determining the morphological and physiological characteristics of the plant stand and/or of the individual plants from the data according to step d) and
f) correcting the position of the spray device and the blower or of the working implements by compensating for deviations in the travel data, position data and target-location data as a result of rolling movements, undulating movements and pitching movements of the carrier and
g) enabling the metering, the nature and extent of the working corresponding to step e) and f) and control of the spray device for applying the spray agent and/or working implements.

2. Method according to claim 1, **characterized in that** as the laser radiation, a radiation with a wavelength of 700 to 1000 nm is used.

3. Method according to claim 1, **characterized in that** from the data of step d) information as to target areas of the plants, as to planting, structure and topography of the stand and the undergrowth, preferably individual plants as individuals, a total stand as an entirety of foreign objects in this stand under upper and lower contours of the foliage walls including gaps, front horizontal cross sectional profiles, volumes of the row, median planes of the row, cross sectional profiles, volumes of the row and the individual crowns and nonuniformity are determined.

4. Method according to one of claims 1 through 3, **characterized in that** parts of the plants, for example leaves, tendrils, branches, stems, shoots, trunks, stalks, fruits blossoms are distinguished with the laser.

5. Method according to one of the claims 1 through 3, **characterized in that** objects, for example support frames, posts or wires or cables spanning posts are distinguished with the sensor.

6. Method according to one of the claims 1 through 3, **characterized in that** the environmental structures, for example the ground, ground profile, landscape markers, buildings, structures, walls, roads and fencing or enclosures are distinguished with the sensor.

7. Method according to one of the claims 1 through 6 **characterized in that** a contactless measurement of travel is carried out with the sensor.

8. Method according to one of the claims 1 through 7, **characterized in that** in the travel of the carrier through a stand of plants the travel displacement measurement is set at zero at significant locations, preferably the start of the row.

9. Method according to claim 7, **characterized in that** the actual position of the carrier after a first transit through the stand of plants is compared with the known position and layout of the stand and corrected.

10. Method according to claim 7 to 10, **characterized in that** with the measurement of travel, differences in the measured values of the left and right rows of the stand along the travelled trace are determined and movements about an upright axis and in curved travel are established.

11. Method according to claim 7 to 10, **characterized in that** the displacement information for determining the distance is obtained from a recognition tree trunks, vine stalks and/or plant stakes.

12. Method according to claim 7 to 10, **characterized in that** the displacement information for determining the distance is obtained by tracking the sprouting tips of the individual plants.

13. Method according to claim 7 to 10, **characterized in that** the displacement information for determining the distance is obtained by tracking the front horizontal cross sectional contours of the planting.

14. Method according to claim 7 to 10, **characterized in that** the displacement measurement is obtained by tracking vertical objects during transit through the scanning field of the sensor, whereby the objects are acquired at different heights one after another in a timed relationship and the detected time intervals provides a measurement of the speed.

15. Method according to claim 7, **characterized in that** the displacement measurement is carried out independently of the travel speed.

16. Method according to claim 7 to 15, **characterized in that** all evaluation methods for determination of the displacement information are correlated with each other and with old data from the stand of plants.

17. Method according to claim 1 to 6, **characterized in that** the position of the sensor along the travel path in the position S₁ is measured and stored.

18. Method according to claim 17, **characterized in that** the position of the sensor and the displaceable carrier is measured progressively along the travel path at all positions S₂ to S_{N}.

19. Method according to claim 17 and 18, **characterized in that** the actual measurement location of the carrier and the location of the stored position S₁ of the sensor are compared as soon as the carrier has travelled a distance S_{X} which corresponds to the distance between the sensor and the nozzles and/or working implements.

20. Method according to claim1, 15 to 19, **characterized in that** the location of the axis of the carrier relative to the frame is corrected to compensate for rolling movement.

21. Method according to claim 1, 15 to 19, **characterized in that** location of the carrier about the vertical axis is adjusted to compensate for pitch movements.

22. Method according to claim 1, 15 to 19, **characterized in that** the location of the traverse axis of the carrier is adjusted to compensate for travel relevant errors by shifting forwardly or rearwardly the spray zone (pitching) relative to a center of gravity.

23. Method according to claim 1 to 6, **characterized in that** the location of the target point is determined by measurement of the distances between target surfaces and sensor.

24. Method according to one of the preceding claims, **characterized in that** the working of the soil includes a loosening, crumbling, furrow formation, or an influencing of the evaporation and/or temperature.

25. Method according to one of the preceding claims, **characterized in that** the underground maintenance is carried out by moving, mulching, chopping erosion protection, shielding from the sun, covering and/or the influencing of the microclimate thereof.

26. Method according to one of the preceding claims, **characterized in that** the horticultural operation on the plants include a cutting, binding, a shaping, a trunk trimming, clearing, collaring, root cutting and/or harvesting.

27. Method according to claim 26, **characterized in that** the cutting is a coarse cutting, fine cutting, shaping, limb removal, topping, cordon cutting, hop cutting and/or fruit tree pruning.

28. Method according to one of the preceding claims, **characterized in that** the harvest of fruit, a determination is made between grape harvest and fruit harvesting.

29. Method according to one of the preceding claims, **characterized in that** a distinction is made between fruit to be harvested, shoots and/or plants elements which are to be removed.

30. Method according to one of the preceding claims, **characterized in that** in the sorting a distinction is made between fruits and/or in the classification of the fruit.

31. System for carrying out the method according to claim 1, with a mobile carrier, for example a vehicle and/or machine coupled thereto, a sensor affixed to the carrier with a radiation source for transmitting a pulsed laser beam, a mirror rotatable about a vertical axis for training the beam onto a foliage wall, a radiation receiver for collecting the radiation reflected from the foliage wall, a computer for processing the reflected radiation and for controlling nozzles affixed to the carrier of a spray device with a supply vessel for the spray agent whereby the nozzles are arranged at a certain distance from the sensor, a liquid pump for displacing the spray agent to the nozzles, valves for opening and closing the nozzles and a blower for producing a two phase flow, **characterized in that** the mirror (4') is configured as a shaped mirror whose partial regions (5, 6) are inclined with different angles to the rotational axis (A) and rotational axis of the mirror (4') is arranged eccentrically to the radiation path (10) of the emitted radiation and the received radiation.

32. System for carrying out the method according to claim 1, with a mobile carrier, for example a vehicle and/or machine coupled thereto, a sensor affixed to the carrier with a radiation source for transmitting a pulsed laser beam, a mirror rotatable about a vertical axis for training the beam onto a foliage wall, a radiation receiver for collecting the radiation reflected from the foliage wall, a computer for processing the reflected radiation and for controlling at least one implement device affixed to the carrier, whereby the implement elements of the devices are spaced at a given distance from the sensor, **characterized in that** the mirror (4') is configured as a shaped mirror whose partial regions (5, 6) are inclined with different angles to the rotational axis (A) and the rotational axis of the mirror (4') is arranged eccentrically to the radiation path (10) of the emitted radiation and the received radiation.

33. System according to claim 31 and 32, **characterized in that** the mirror (4') is configured with pie shaped circular segments of which one segment preferably is at an inclination angle of 45° and a further segment is at an inclination angle between 1 to 45°, preferably 15°.with respect to a normal to the rotational axis (A) of the mirror.

34. System according to claim 31 to 33, **characterized in that** the radiation path (10) is coaxial with the rotational axis (A) of the mirror (4').

35. System according to claim 31 to 34, **characterized in that** the radiation source (7) is provided with at least one time measurement circuit triggerable by a light pulse.

36. System according to claim 31 to 35, **characterized in that** the receiver (8) is provided with at least one device for acquiring the transit time.

37. System according to claim 31 to 36, **characterized in that** the optics (9) for the radiation configuration is arranged spatially fixed between the radiation source/receiver (7, 8) and the mirror (4).

38. System according to claim 31 to 37, **characterized in that** the sensor (3) follows the movement of the carrier during transit without a lag.

39. System according to claim 31 to 38, **characterized in that** the axis of the sensor (3) is arranged in a forwardly inclined direction preferably in the travel direction.

40. System according to claim 32, **characterized in that** as the working implements, a cutting device, a digging device, an excavating device, an undercutting device, a binder device, a shaping device, a clearing device, a shaking device, s sorting device or a complete harvesting device, is provided.

## Revendications

1. Procédé destiné à l'influence, conforme aux besoins et spécifique au volume, de sols et plantes, notamment par apport/dosage de produits à pulvériser, tels que produits phytosanitaires et/ou engrais et eau, au traitement du sol, aux soins du sous-étage et/ou au traitement et aux soins de la plante sur des terrains plantés de manière régulière ou irrégulière avec des arbres, comme des arbres d'allées ou des arbres de forêt ou similaires, avec des cultures sur grandes étendues, notamment des cultures viticoles et des cultures fruitières, du houblon, des agrumes, des olives ou similaires, des arbustes ou avec des plantes herbacées vivaces, comme les bananes ou similaires, dans lequel les plantes sont balayées par des rayons laser monochromatiques pulsatoires, générés au moyen d'un capteur unique fixé sur un support mobile déplacé en passant devant les plantes, dans lequel le spectre de rayonnement réfléchi par les feuilles est enregistré par ce capteur et dans lequel le spectre enregistré est converti en signaux optiques et dans lequel ces signaux sont amenés à un ordinateur qui mémorise les signaux, les évalue et commande l'apport/le dosage de la dose de produits à pulvériser en fonction de l'état de la végétation, commande le traitement du sol et de la plante ainsi que la récolte en sortant des instructions de commutation destinées à l'actionnement des dispositifs de pulvérisation et ventilateurs et/ou appareils de traitement associés au support mobile, comprenant les étapes suivantes :
a) création d'une voie de circulation de référence sur le terrain, avec un premier passage par le fait de repérer et de localiser des objets de référence caractéristiques, tels que plantes, échalas, constructions, etc. à côté de la voie de circulation ;
b) balayage des plantes par rapport à la voie de circulation de référence par émission d'un rayon laser oscillant pulsé sur une voie à peu près horizontale ou légèrement inclinée, devant, latéralement et au-dessus du support dans une courbe dans l'espace située sur un segment de l'aire latérale d'un cône s'ouvrant en direction de marche, qui détecte les rangées de plantes à peu près en spirale lors de l'avance du support, le rayon laser générant une trame de points lumineux, à haute résolution dans l'espace, sur les plantes dans différents plans de balayage ;
c) démarrage d'un ou de plusieurs organes de mesure de temps en même temps que l'émission du rayon laser selon l'étape b), différentes valeurs de niveau étant affectées aux organes de mesure de temps ;
d) arrêt des organes de mesure de temps afin de déterminer les différents niveaux de réflexion des fractions de rayonnement réfléchies par la trame de points lumineux pour déterminer, de manière séparée et/ou commune, des données de parcours, de position et de destination, pour enregistrer les fractions de rayonnement par le capteur émettant le rayonnement ainsi que pour amener les signaux à l'ordinateur par l'intermédiaire d'une unité de réception calculant le temps de propagation des signaux et convertissant les signaux en données, et pour enregistrer les données dans une mémoire circulaire de l'ordinateur ;
e) détermination des valeurs caractéristiques, morphologiques et physiologiques, du peuplement de plantes et/ou des plantes individuelles à partir des données selon l'étape d) et
f) correction de la position des dispositifs de pulvérisation et du ventilateur ou des appareils de traitement par compensation des écarts dans les données de parcours, de position et de destination suite à des mouvements de roulis, de sinuosité et/ou de tangage du support, et
g) détermination du dosage, du type et de l'étendue du traitement selon les étapes e) et f), et commande des dispositifs de pulvérisation, pour l'apport du produit à pulvériser, et/ou des appareils de traitement.

2. Procédé selon la revendication 1, **caractérisé en ce qu'**un rayonnement ayant une longueur d'onde de 700 à 1000 nm est utilisé en tant que rayonnement laser.

3. Procédé selon la revendication 1, **caractérisé en ce qu'**à partir des données de l'étape d), des informations sont déterminées concernant la terrain visée des plantes, la plantation, la structure et la topographie du peuplement et du sous-sol, de préférence de plantes seules en tant qu'individus, l'ensemble du peuplement en tant que totalité, les objets étrangers dans le peuplement, les contours supérieur et inférieur du mur de feuillage, y compris les vides, le contour horizontal de section transversale de la rangée, le plan central de la rangée, le profil transversal, les volumes de la rangée et de la cime unique et les irrégularités.

4. Procédé selon l'une quelconque des revendications 1 à 3, **caractérisé en ce que** des parties de la plante, par exemple les feuilles, les rameaux, les branches, les tiges, les pousses, les troncs, les pieds, les fruits et les fleurs, sont identifiées par le capteur.

5. Procédé selon l'une quelconque des revendications 1 à 3, **caractérisé en ce que** des objets, par exemple des échafaudages à étais, des échalas ou des haubanages, sont identifiés par le capteur.

6. Procédé selon l'une quelconque des revendications 1 à 3, **caractérisé en ce que** l'environnement, de préférence le sol, le profil du sol, des marques du terrain, des bâtiments, des constructions, des murs, des chemins et des clôtures, est identifié par le capteur.

7. Procédé selon l'une quelconque des revendications 1 à 6, **caractérisé en ce qu'**une mesure de chemin sans contact est réalisée par le capteur.

8. Procédé selon la revendication 7, **caractérisé en ce que** lors de la marche du support à travers le peuplement, la mesure du chemin est mise sur zéro à des endroits significatifs, notamment au début de rangée.

9. Procédé selon la revendication 7, **caractérisé en ce que** les positions momentanées du support, après un premier passage à travers le peuplement, sont comparées aux positions et aux formes de base connues du peuplement et sont corrigées.

10. Procédé selon les revendications 7 à 9, **caractérisé en ce qu'**avec la mesure du chemin, des différences dans les valeurs de mesure de la rangée gauche et de la rangée droite du peuplement de la voie de circulation de référence sont déterminées et **en ce que** des mouvements autour de l'axe vertical et des virages sont constatés.

11. Procédé selon les revendications 7 à 10, **caractérisé en ce que** l'information de chemin destinée à déterminer le chemin est obtenue à partir d'une identification de troncs d'arbres, de pieds de vigne et/ou d'échalas.

12. Procédé selon les revendications 7 à 10, **caractérisé en ce que** l'information de chemin destinée à déterminer le chemin est obtenue à partir d'une poursuite des points de croissance de la plante individuelle.

13. Procédé selon les revendications 7 à 10, **caractérisé en ce que** l'information de chemin destinée à déterminer le chemin est obtenue à partir d'une poursuite du contour avant horizontal de la section transversale.

14. Procédé selon les revendications 7 à 10, **caractérisé en ce que** la mesure du chemin est réalisée par une poursuite d'objets verticaux pendant la marche au moyen du champ de balayage du capteur, les objets étant détectés à différentes hauteurs de manière décalée dans le temps les uns par rapport aux autres, et les intervalles de temps déterminés donnant une mesure pour la vitesse.

15. Procédé selon la revendication 7, **caractérisé en ce que** la mesure du chemin est réalisée indépendamment de la vitesse de marche.

16. Procédé selon les revendications 7 à 15, **caractérisé en ce que** toutes les méthodes d'évaluation pour déterminer l'information de chemin sont corrélées entre elles et avec d'anciennes données du peuplement.

17. Procédé selon les revendications 1 à 6, **caractérisé en ce que** la position du capteur le long du parcours est mesurée dans la position S₁ et mémorisée.

18. Procédé selon la revendication 17, **caractérisé en ce que** la position du capteur et du support mobile est mesurée de manière permanente le long du parcours sur toutes les positions S₂ à S_{N}.

19. Procédé selon les revendications 17 et 18, **caractérisé en ce que** la position momentanément mesurée du support et la position mémorisée S₁ du capteur sont comparées dès que le support a parcouru un chemin S_{X} correspondant à l'écart entre le capteur et les buses et/ou les appareils de travail.

20. Procédé selon les revendications 1, 15 à 19, **caractérisé en ce que** la position de l'axe du support est corrigée par rapport au cadre dans le but de compenser les mouvements de roulis.

21. Procédé selon les revendications 1, 15 à 19, **caractérisé en ce que** la position du support est déplacée de l'axe vertical pour compenser des mouvements de sinuosité.

22. Procédé selon les revendications 1, 15 à 19, **caractérisé en ce que** la position de l'axe transversal du support, pour compenser des erreurs importantes pour le parcours, est déplacée par avancement et recul de la zone de pulvérisation (tangage) par rapport au point de rotation.

23. Procédé selon les revendications 1 à 6, **caractérisé en ce que** la position de la destination est déterminée en mesurant les distances entre la surface visée et le capteur.

24. Procédé selon l'une quelconque des revendications précédentes, **caractérisé en ce que** le traitement du sol comprend un ameublement, un émiettement, un buttage, une influence de l'évaporation et/ou de la température.

25. Procédé selon l'une quelconque des revendications précédentes, **caractérisé en ce que** les soins du sous-étage sont réalisés par fauchage, mulching, broyage, par une protection contre l'érosion, un ombrage, un recouvrement et/ou une influence microclimatique.

26. Procédé selon l'une quelconque des revendications précédentes, **caractérisé en ce que** le traitement des plantes comprend une taille, un ficelage, une mise en forme, un nettoyage de tronc, un ébourgeonnage, un écorçage, un cemage et/ou une récolte.

27. Procédé selon la revendication 26, **caractérisé en ce que** la taille est une taille large, une taille fine, une taille de mise en forme, un défeuillage, un rognage, une taille par cordon, une taille de houblon et/ou une taille de formations ligneuses.

28. Procédé selon l'une quelconque des revendications précédentes, **caractérisé en ce que** lors de la récolte de fruits, on fait la distinction entre la récolte de raisins ou la récolte de fruits d'arbres.

29. Procédé selon l'une quelconque des revendications précédentes, **caractérisé en ce qu'**en sélectionnant, on réalise une distinction entre récolte de fruits, de pousses et/ou d'organes de plantes.

30. Procédé selon l'une quelconque des revendications précédentes, **caractérisé en ce qu'**en triant, on réalise une distinction entre les fruits et/ou un classement des fruits.

31. Système pour la réalisation du procédé selon la revendication 1, comprenant un support mobile, par exemple un véhicule et/ou des machines de travail accouplées, un capteur fixé sur le support, muni d'une source de rayonnement destinée à émettre un rayon laser pulsé, un miroir pivotant autour d'un axe vertical pour ajuster le rayon sur un mur de feuillage, un récepteur de rayonnement destiné à recevoir les rayons réfléchis par le mur de feuillage, un ordinateur destiné à traiter le rayonnement réfléchi et commander un dispositif de pulvérisation fixé sur le support, présentant des buses, muni d'un réservoir pour le produit à pulvériser, les buses étant disposées à écart distinct du capteur, une pompe de liquide destinée à transporter le produit à pulvériser vers les buses, des vannes destinées à ouvrir et fermer les buses et un ventilateur destiné à générer un flux à deux phases, **caractérisé en ce que** le miroir (4') est exécuté en tant que miroir façonné, dont les zones partielles (5, 6) sont disposées avec un angle différent de manière inclinée par rapport à l'axe de rotation (A), et **en ce que** l'axe de rotation du miroir (4') est disposé de manière excentrique par rapport au trajet du faisceau (10) du rayon d'émission et du rayon de réception.

32. Système pour la réalisation du procédé selon la revendication 1, comprenant un support mobile, par exemple un véhicule et/ou des machines de travail accouplées, un capteur fixé sur le support, muni d'une source de rayonnement destinée à émettre un rayon laser pulsé, un miroir pivotant autour d'un axe vertical pour ajuster le rayon sur un mur de feuillage, un récepteur de rayonnement destiné à recevoir les rayons réfléchis par le mur de feuillage, un ordinateur destiné à traiter le rayonnement réfléchi et commander au moins un appareil de traitement fixé sur le support, les organes de traitement étant disposés à écart distinct du capteur, **caractérisé en ce que** le miroir (4') est exécuté en tant que miroir façonné, dont les zones partielles (5, 6) sont disposées avec un angle différent de manière inclinée par rapport à l'axe de rotation (A), et **en ce que** l'axe de rotation du miroir (4') est disposé de manière excentrique par rapport au trajet du faisceau (10) du rayon d'émission et du rayon de réception.

33. Système selon les revendications 31 et 32, **caractérisé en ce que** le miroir (4') est formé par des segments circulaires en forme de parts de gâteau, dont un segment présente de préférence un angle d'inclinaison de 45° et un autre segment un angle d'inclinaison de 1 à 45°, de préférence de 15°, par rapport à la normale de l'axe de rotation (A) du miroir.

34. Système selon les revendications 31 à 33, **caractérisé en ce que** le trajet du faisceau (10) est disposé de manière coaxiale par rapport à l'axe de rotation (A) du miroir (4').

35. Système selon les revendications 31 à 34, **caractérisé en ce que** la source du rayon (7) est munie d'au moins un organe de mesure de temps pouvant être déclenché par une impulsion lumineuse.

36. Dispositif selon les revendications 31 à 35, **caractérisé en ce que** le récepteur (8) est muni d'au moins un dispositif destiné à enregistrer le temps de propagation.

37. Système selon les revendications 31 à 36, **caractérisé en ce que** l'optique (9) pour la formation de rayons est disposée de manière stationnaire entre la source de rayonnement/le récepteur (7 ; 8) et le miroir (4').

38. Système selon les revendications 31 à 37, **caractérisé en ce que** le capteur (3) exécute sans retard les mouvements du support pendant la marche.

39. Système selon les revendications 31 à 37, **caractérisé en ce que** l'axe du capteur (3) est disposé de préférence en étant incliné vers l'avant dans le sens de marche.

40. Système selon la revendication 32, **caractérisé en ce que** des dispositifs permettant de couper, creuser, scarifier, effectuer des tailles basses, lier, former, ébourgeonner, secouer, classer et récolter-charger sont prévus en tant qu'appareils de traitement.
